(19) Europäisches Patentamt
European Patent Office
Office européen des brevets

(11) **EP 1 248 204 B1**

(12) **EUROPÄISCHE PATENTSCHRIFT**

(45) Veröffentlichungstag und Bekanntmachung des Hinweises auf die Patenterteilung:
**20.11.2013 Patentblatt 2013/47**

(21) Anmeldenummer: **02006596.7**

(22) Anmeldetag: **22.03.2002**

(51) Int Cl.:
*G06F 17/10* [(2006.01)]     *G01N 3/08* [(2006.01)]
*G06F 17/17* [(2006.01)]

(54) **Verfahren und Computersystem zur Ermittlung eines Zusammenhangs zwischen einer Dehnung und einer Spannung**

Method and system to determine the relationship between stress and strain

Dispositif et méthode pour déterminer la relation entre contraintes et déformations

(84) Benannte Vertragsstaaten:
**AT BE CH CY DE DK ES FI FR GB GR IE IT LI LU MC NL PT SE TR**
Benannte Erstreckungsstaaten:
**AL**

(30) Priorität: **04.04.2001 DE 10116772**

(43) Veröffentlichungstag der Anmeldung:
**09.10.2002 Patentblatt 2002/41**

(73) Patentinhaber: **Underwriters Laboratories Inc Northbrook, IL 60062-2096 (US)**

(72) Erfinder:
• **Sarabi, Bahman, Dr.**
  **47803 Krefeld (DE)**
• **Wanders, Martin, Dr.**
  **51063 Köln (DE)**
• **Wächtler, Dietmar**
  **42929 Wermelskirchen (DE)**

• **Wende, Andreas**
  **40822 Mettmann (DE)**

(74) Vertreter: **Seemann, Ralph et al**
  **Patentanwälte**
  **Seemann & Partner**
  **Raboisen 6**
  **20095 Hamburg (DE)**

(56) Entgegenhaltungen:
• **MA C C M ET AL: "Creep behavior of carbon-fiber-reinforced polyetheretherketone (PEEK)[+-45]4S laminated composites" Composites Part B (Engineering) Elsevier UK, Bd. 28B, Nr. 4, 1997, Seiten 407-417, XP002527537 ISSN: 1359-8368**
• **SHING-CHUNG YEN ET AL: "Accelerated characterization of creep response of an off-axis composite material" Composites Science and Technology UK, Bd. 38, Nr. 2, 1990, Seiten 103-118, XP002527536 ISSN: 0266-3538**

**Beschreibung**

Die Erfindung betrifft ein Verfahren und ein Computersystem sowie ein Computerprogrammprodukt zur Ermittlung eines Zusammenhangs zwischen einer Dehnung $\varepsilon$ und einer Spannung $\sigma$.

Aus dem Stand der Technik ist es bekannt, den Zusammenhang zwischen den kurzzeitig einwirkenden Kräften und daraus resultierenden Wegen durch Spannungs-Dehnungs-Kurven darzustellen. Insbesondere auf dem Gebiet der Kunststoffe sind solche Spannungs-Dehnungs-Kurven eine wichtige Basis für die Konstruktion von Kunststoff-Teilen.

Nachteilig bei bekannten Spannungs-Dehnungs-Kurven ist, dass deren Ermittlung in Abhängigkeit der Temperatur aufgrund der Vielzahl der erforderlichen Zugversuche sehr zeit- und kostenintensiv ist. Ferner geben die bekannten Spannungs-Dehnungs-Kurven nur den Zusammenhang zwischen der Spannung und der Dehnung bei Kurzzeitzugversuchen für die gemessenen Temperaturen an. Der Verlauf der Dehnung in Abhängigkeit von der konstanten Belastung je nach deren Belastungsdauer lässt sich aus solchen Spannungs-Dehnungs-Kurven nicht ermitteln.

Der zeitabhängige nicht-elastische Dehnungsanteil wird in sogenannten Zeitstandversuchen ermittelt, bei dem ein Probekörper über längere Zeit mit einer konstanten Spannung beaufschlagt wird. Nachteilig sind dabei die für die Zeitstandversuche erforderlichen Zeiträume, um das langfristige Dehnungsverhalten, z.B. nach 5, 7, 10 oder mehr Jahren zu untersuchen. Auch diese Daten sind eine für die Konstruktion von Kunststoffteilen wichtige Basis; sie liegen jedoch oft nicht oder nicht in der erforderlichen Genauigkeit wegen des erforderlichen zeitlichen Aufwands zur Durchführung der entsprechenden Zeitstandversuche vor.

Aus dem Dokument C.C.M. MA et al. "Creep behavior of carbonfiber-reinforced polyetheretherketone (PEEK) [±45]4S laminated composites (I)", Composites Part B (Engineering), Elsevier UK, Bd. 28B, Nr. 4, 1997, Seiten 407 bis 417, XP002527537 ISSN: 1359-8368, ist ein Verfahren zur Ermittlung des Kriechverhaltens von AS-4/PEEK $[\pm 45]_{4S}$ laminierte Kompositmaterialien offenbart. Es wird die Temperaturabhängigkeit des viskoelastischen Verhaltens dieses Materials durch eine dynamische mechanische Analyse vorgenommen. Hierzu werden Kurzzeitkriechdehnungstests bei verschiedenen mechanischen Spannungen und bei erhöhten Temperaturen durchgeführt. Diese Kriechdehnungsdaten wurden mittels einer Findley-Gleichung gefittet.

Aus dem Dokument Shing-Chung Yen et al. "Accelerated Characterization of Creep Response of an Off-Axis Composite Material", Composites Science and Technology UK, Bd. 38, Nr. 2, 1990, Seiten 103 bis 118, XP002527536 ISSN: 0266-3538, beschreibt Untersuchungen der beschleunigten Charakterisierung des Kriechverhaltens des unidirektionalen Kompositmaterials SMC-C50. Es werden Kurzzeitkriechtests bei verschiedenen Spannungsniveaus und erhöhten Temperaturen ausgeführt und die entsprechenden Daten werden mittels einer Findley-Gleichung, die mit dem "Time-Temperature-Stress Superposition Principle" gekoppelt ist, modelliert. Es wird eine Masterkurve des Kriechverhaltens zwischen 57 und 400 Tagen aufgrund von Kurzzeitmessungen von 180 Minuten erzeugt.

Der Erfindung liegt daher die Aufgabe zugrunde ein verbessertes Verfahren, Computersystem und Computerprogrammprodukt zur Ermittlung eines Zusammenhangs zwischen der Dehnung und der Spannung, Zeit und Temperatur zu schaffen.

Die der Erfindung zugrundeliegende Aufgabe wird durch die Merkmale der unabhängigen Patentansprüche jeweils gelöst. Bevorzugte Ausführungsformen sind in den abhängigen Patentansprüchen angegeben.

Die Erfindung erlaubt die Ermittlung eines Zusammenhangs zwischen der Dehnung und der Spannung in Abhängigkeit sowohl der Belastungsdauer der Spannung, der Höhe der Spannung als auch der Temperatur. Der Aufwand der für die Ermittlung der entsprechenden Koeffizienten erforderlichen Zugversuche ist dabei minimal.

Beispielsweise ermöglicht es das erfindungsgemäße Extraprolationsverfahren mit einer relativ kurzen Versuchsdauer von ca. sieben Wochen eine Aussage über das Werkstoffverhalten für eine Belastungsdauer von über einem Jahr zu treffen. Dies trifft gleichermaßen für verstärkte als auch für nicht verstärkte Thermoplaste und für weitere Kunststoffmaterialien zu.

Nach der Ermittlung der erforderlichen Koeffizienten mittels der erfindungsgemäßen Extraprolationsverfahren kann die resultierende Funktion zur Beschreibung beliebiger Spannungs-Dehnungs-Kurven in Abhängigkeit von der Belastungsdauer t und der Temperatur T verwendet werden. Eine solche Funktion kann in einem Computerprogramm implementiert werden, so dass mittels einer Datenverarbeitungseinrichtung, beispielsweise eines Personal Computers, jederzeit auf einen gewünschten Kurvenverlauf oder einen zu berechnenden Dehnungs- oder Spannungswert zugegriffen werden kann.

Dies ist insbesondere bei der Konstruktion von Kunststoffteilen von Vorteil und erlaubt eine präzise Auslegung der Kunststoffteile auch unter Berücksichtigung des Spannungs-Dehnungs Zeit/Temperatur-Verhaltens, insbesondere auch hinsichtlich des Langzeit-Dehnverhaltens.

Im Weiteren wird ein Ausführungsbeispiel der Erfindung anhand der Figuren näher erläutert. Es zeigen

Fig.      1 eine Kurvenschar von Spannungs-Dehnungs-Kurven für verschiedene Temperaturen bei einer Kurzzeit-Zugbelastung,

Fig. 2    eine schematische Darstellung einer Potenzfunktion nach Findley für einen Zeitstandversuch,

Fig.3    die Ermittlung eines approximierten Kurvenverlaufs für die Dehnung in Abhängigkeit der Zeit für die Potenzfunktion nach Findley,

Fig. 4    die Verläufe der Koeffizienten n ($\sigma$) und m ($\sigma$) in Abhängigkeit von der Spannung im Zeitstandversuch für eine bestimmte Temperatur,

Fig. 5    die zur Approximation der spannungsabhängigen Verläufe der Koeffizienten m und n verwendeten Funktionen und die Ermittlung der Koeffizienten dieser Funktionen jeweils für eine bestimmte Temperatur $T_1$, $T_2$ und $T_3$,

Fig. 6    den Verlauf des Koeffizienten m ($\sigma$) für drei verschiedene Temperaturen,

Fig. 7    den Verlauf des Koeffizienten n ($\sigma$) für drei verschiedene Temperaturen,

Fig. 8    die sich aus den Verläufen n ($\sigma$) und m ($\sigma$) ergebenden temperaturabhängigen Verläufe der Koeffizienten $a_1$, $a_2$ sowie $b_0$, $b_1$ und $b_2$,

Fig. 9    die zur Ermittlung der Spannungs-Dehnungs-Kurvenschar in Abhängigkeit von der Temperatur und der Belastungsdauer der Spannung erforderlichen Schritte,

Fig. 10    eine Detaildarstellung der Schritte der Figur 9 anhand eines bevorzugten Ausführungsbeispiels,

Fig. 11    eine Darstellung von tatsächlichem und errechneten Dehnungsverläufen für einen Zeitstandversuch, und

Fig. 12    den nicht-linearen Anfangsbereich der Dehnung in einem Zeitstandversuch über der Belastungsdauer.

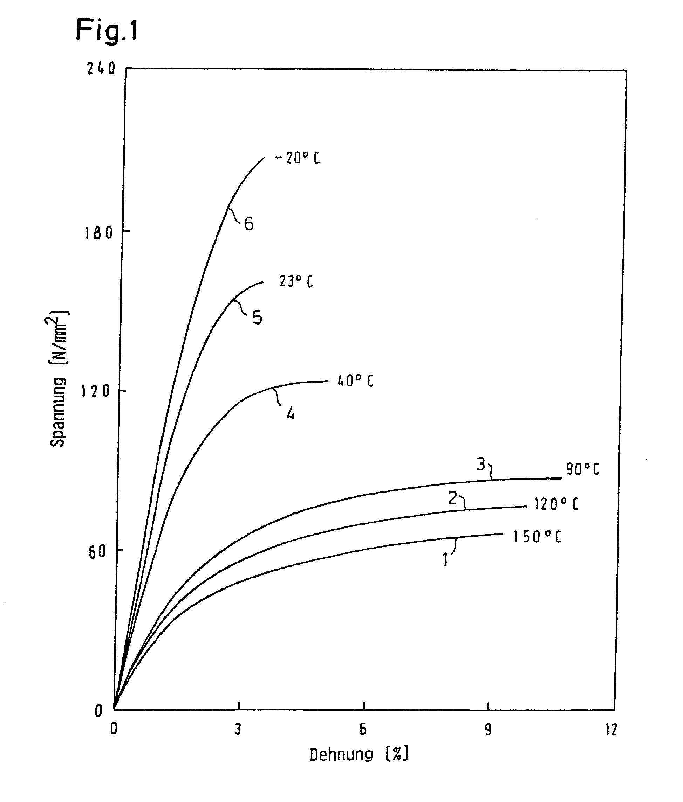

Die Fig. 1 zeigt eine Schar von Spannungs-Dehnungs-Kurven 1 bis 6. Die Kurven wurden jeweils für den Werkstoff Durethan-BKV 130 (Polyamid modifiziert mit Glasfaser und Kautschuk) mit einem Zugstab von 4 mm Dicke in einem Zugversuch bei 5 mm pro Minute Zuggeschwindigkeit im spritzfrischen Zustand gemessen.

Die Spannungs-Dehnungs-Kurve 1 wurde bei einer Temperatur von 150° Celsius gemessen; die weiteren Spannungs-Dehnungs-Kurven 2 bis 6 bei Temperaturen von 120° Celsius, 90° Celsius, 40° Celsius, 23 ° Celsius bzw. -20° Celsius. Dieselben Kurven ergibt auch eine Berechnung nach dem erfindungsgemäßen Verfahren.

Für die Beschreibung des Zusammenhangs zwischen der Spannung $\sigma$ und der Dehnung $\varepsilon$ in Abhängigkeit von der Temperatur T bei einer Kurzzeit-Zugbelastung - wie in Fig. 1 dargestellt - wird dabei der folgende Ansatz gewählt:

$$\sigma(T,\varepsilon) = A_1 + A_2 + A_3 + A_4 \qquad (1)$$

wobei

$$A_1 = c_1\varepsilon + c_2\varepsilon^3 + c_3\varepsilon^5 + c_4 \ln\left(\varepsilon + \sqrt{\varepsilon^2 + 1}\right) \quad (2)$$

$$A_2 = c_5\varepsilon T + c_6\varepsilon T^3 + c_7\varepsilon T^5 \qquad (3)$$

$$A_3 = c_8\varepsilon^3 T + c_9\varepsilon^3 T^3 + c_{10}\varepsilon^3 T^5 \qquad (4)$$

$$A_4 = c_{11}\varepsilon^5 T + c_{12}\varepsilon^5 T^3 + c_{13}\varepsilon^5 T^5 \qquad (5)$$

Zur Bestimmung der Koeffizienten $c_1$ bis $c_{13}$ werden dabei zum Beispiel fünf bis zehn, vorzugsweise fünf bis sieben, Kurzzeitzugversuche bei verschiedenen Temperaturen für ein bestimmtes Material durchgeführt. Aufgrund der experimentell ermittelten Spannungs-Dehnungs-Kurven wird das sich daraus ergebende Gleichungssystem numerisch gelöst, so dass man die Werte der Koeffizienten $c_1$ bis $c_{13}$ erhält.

Die so parametrisierte Gleichung (1) beschreibt dann also den Zusammenhang zwischen der Spannung $\sigma$ und der Dehnung $\varepsilon$ für beliebige Temperaturen T für ein bestimmtes Material bei Kurzzeitzugbelastung.

Die entsprechenden berechneten Kurvenverläufe sind ebenfalls in der Fig. 1 dargestellt; in dem betrachteten Ausführungsbeispiel sind die berechneten und die gemessenen Kurven weitgehend deckungsgleich. Abweichungen der gemessenen von den berechneten Kurven können jedoch im Rahmen von mess- und werkstoffbedingten Streuungen vorkommen.

Das Kriechverhalten des Werkstoff im Zeitstandversuch wird durch eine Potenzfunktion nach Findley beschrieben:

$$\varepsilon(t) = \frac{\sigma}{E} + m\left(\frac{t}{t_0}\right)^n \quad (6)$$

wobei $t_0$ eine Einheitszeit ist und es sich bei m und n um die sogenannten Kriechparameter handelt. Die Gleichung (6) beinhaltet also sowohl den elastischen Dehnungsanteil als auch den viskoelastischen und viskosen Dehnungsanteil, der durch die Einheitszeit $t_0$ und die Kriechparameter m und n sowie den Elastizitätsmodul E festgelegt wird.

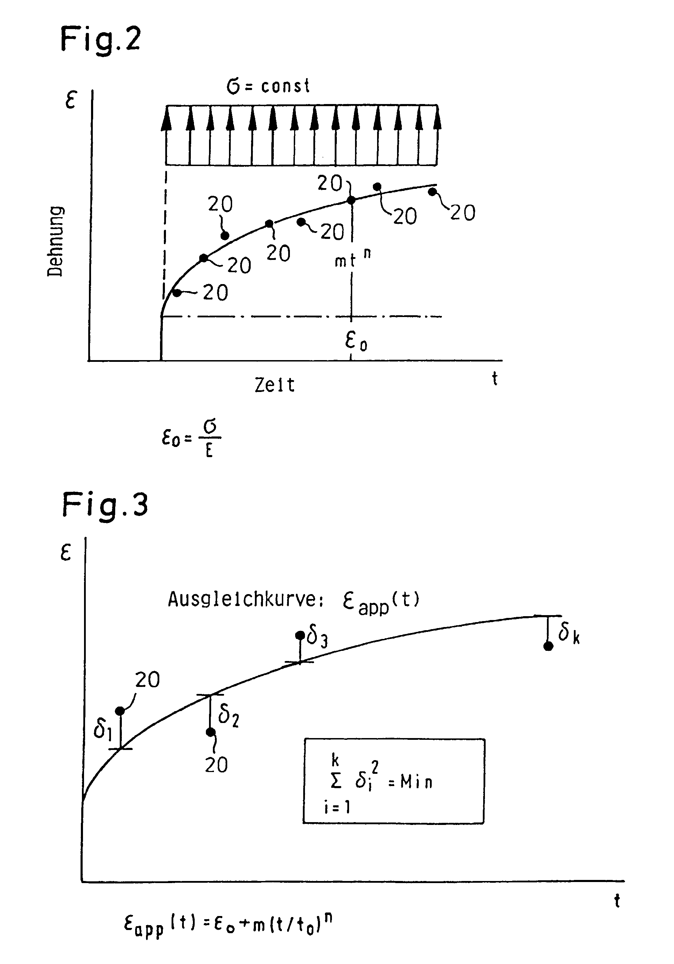

Die Fig. 2 zeigt schematisch das Prinzip eines Zeitstandversuches. Dabei wird ein Probekörper mit einer zeitlich konstanten Belastung beaufschlagt, indem beispielsweise ein definiertes Gewicht an den Probekörper gehängt wird. Zu unterschiedlichen Zeitpunkten werden dann Messpunkte 20 durch Ermittlung der zu dem betreffenden Zeitpunkt jeweils vorliegenden Dehnung $\varepsilon$ ermittelt.

Die Fig. 3 veranschaulicht die Ermittlung der Kriechparameter m und n aus den ermittelten Messpunkten 20 nach der Methode der kleinsten Fehlerquadrate. Dabei gehen die Abweichungen $\delta_1$ bis $\delta k$ der Messpunkte 20 von einer approximierten Dehnungskurve $\varepsilon_{app}$ (t) in die Ermittlung der Kriechparameter m und n ein.

Die so ermittelten Kriechparameter m und n beschreiben dann den zeitlichen Dehnungsverlauf für eine bestimmte Spannung $\sigma$ und bei einer bestimmten Temperatur T. Die approximierte Dehnungskurve lässt sich auch für lange Belastungszeiträume extrapolieren.

Um zu einer allgemeineren Aussage der Gleichung (6) zu kommen, werden die Kriechparameter m und n jeweils in Abhängigkeit von der Spannung $\sigma$ ausgedrückt:

$$\varepsilon(t,\sigma) = \frac{\sigma}{E} + m(\sigma)\left(\frac{t}{t_0}\right)^{n(\sigma)} \quad (7)$$

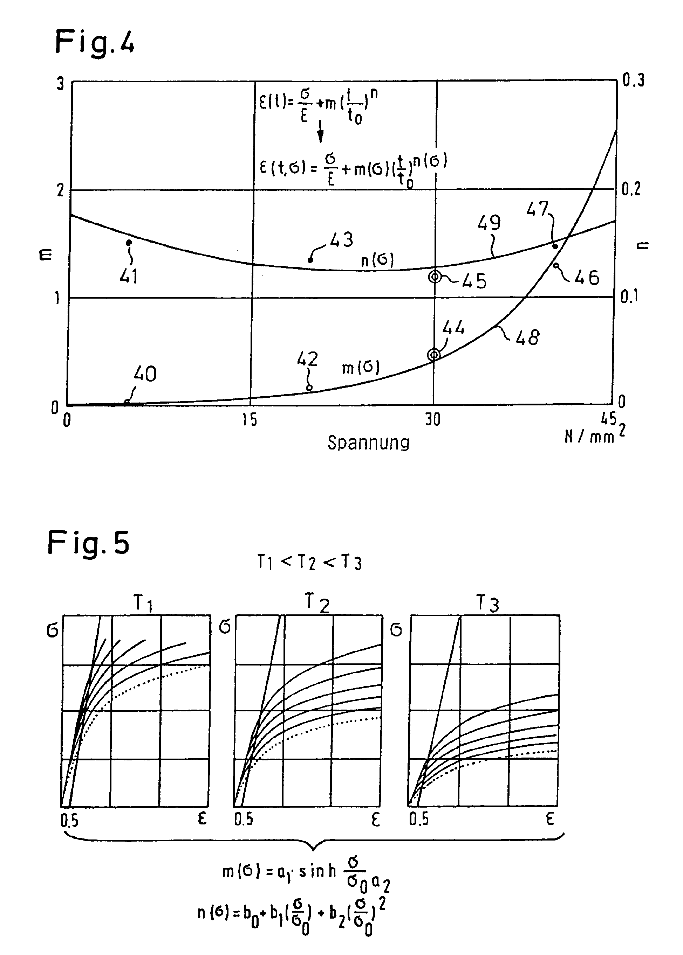

Es werden dann für jeweils dieselbe Temperatur Zeitstandversuche mit einer unterschiedlichen konstanten Spannung $\sigma$ durchgeführt und die Kriechparameter n und m für die unterschiedlichen Spannungen $\sigma$ ermittelt. Ein Ergebnis einer solchen Messreihe zeigt die Fig. 4. Die Messreihen wurden dabei bei gleichbleibender Temperatur T durchgeführt.

Die Kurve 48 gibt den spannungsabhängigen Verlauf des Kriechparameters m an; die Kurve 49 gibt den spannungsabhängigen Verlauf des Kriechparameters n an. Die Kurven 48 und 49 werden aus den aus einzelnen Zeitstandversuchen für verschiedene Spannungen ermittelten Wertepaaren für n und m ermittelt.

Beispielsweise wird ein Zeitstandversuch mit einer Spannung von ca. 5 Newton pro $mm^2$ durchgeführt, wobei sich für n der Parameterwert Punkt 41 und für m der Parameterwert Punkt 40 ergibt. Entsprechende Zeitstandversuche werden für Spannungen von ca. 20 Newton pro $mm^2$, 30 Newton pro $mm^2$ und 40 Newton pro $mm^2$ durchgeführt, so dass sich die weiteren Wertepaare Punkte 42, 43; 44, 45; 46, 47 für die Kriechparameter m und n jeweils bei den verschiedenen Spannungen ergeben, wie in Fig. 4 dargestellt.

Entsprechende Zeitstandversuche bei unterschiedlichen Spannungen $\sigma$ werden beispielsweise für drei verschiedene Temperaturen $T_1$, $T_2$ und $T_3$ durchgeführt, wie in Fig. 5 dargestellt. Für jede der Temperaturen $T_1$, $T_2$ und $T_3$ werden dann den Kurven 47 und 48 der Fig. 4 entsprechende Kurvenverläufe der Kriechparameter n und m ermittelt.

Die Kurvenverläufe der Kriechparameter m und n werden im Weiteren durch die folgenden Ansätze approximiert:

$$m(\sigma) = a_1 \cdot \sinh \frac{\sigma}{\sigma_0 \cdot a_2} \qquad (8)$$

$$n(\sigma) = b_0 + b_1 \left( \frac{\sigma}{\sigma_0} \right) + b_2 \left( \frac{\sigma}{\sigma_0} \right)^2 \qquad (9)$$

wobei es sich bei $a_1$, $a_2$ bzw. $b_0$, $b_1$ und $b_2$ jeweils um von der Temperatur T abhängige Parameterwerte handelt.

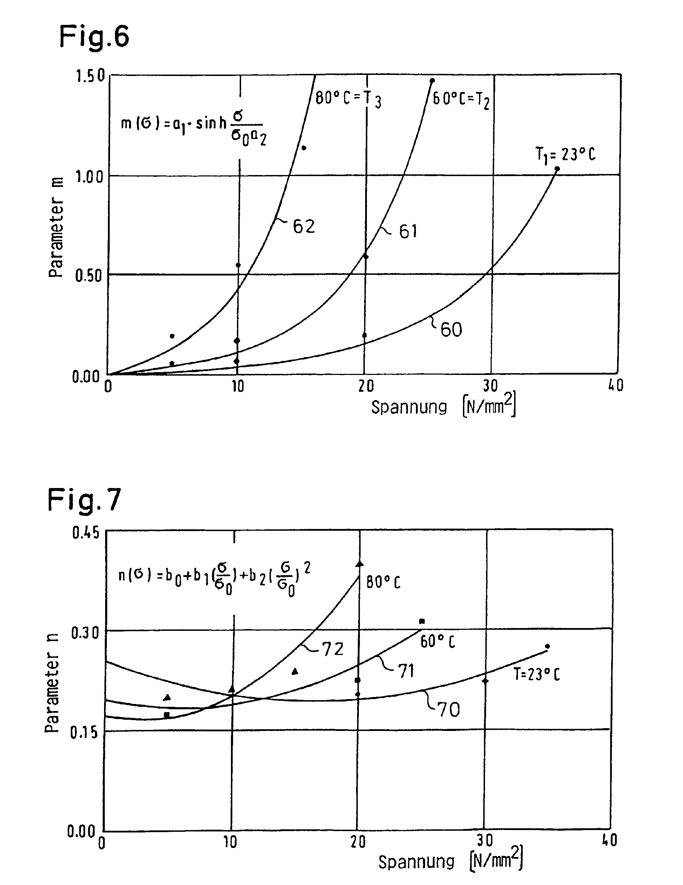

Die Fig. 6 zeigt drei unterschiedliche Verläufe des Kriechparameters m in Abhängigkeit von der Spannung für drei unterschiedliche Temperaturen $T_1$ = 23° Celsius, $T_2$ = 60° Celsius und $T_3$ = 80° Celsius woraus sich die Kurvenverläufe 60, 61 und 62 ergeben.

Die Fig. 7 zeigt die entsprechenden Kurven 70, 71 und 72 des Kriechparameters n jeweils für eine bestimmte Temperatur in Abhängigkeit von der Spannung.

Zur Ermittlung der Kurven 60, 61 und 62 bzw. 70, 71 und 72 werden jeweils die Werte der Koeffizienten $a_1$, $a_2$ bzw. $b_0$, $b_1$ und $b_2$ der Formeln (8) und (9) aufgrund der jeweils für die Kriechparameter m und n ermittelten Einzelwerte aus den Zeitstandversuchen ermittelt. Die entsprechenden Einzelwerte sind in den Figuren 6 und 7 mitdargestellt.

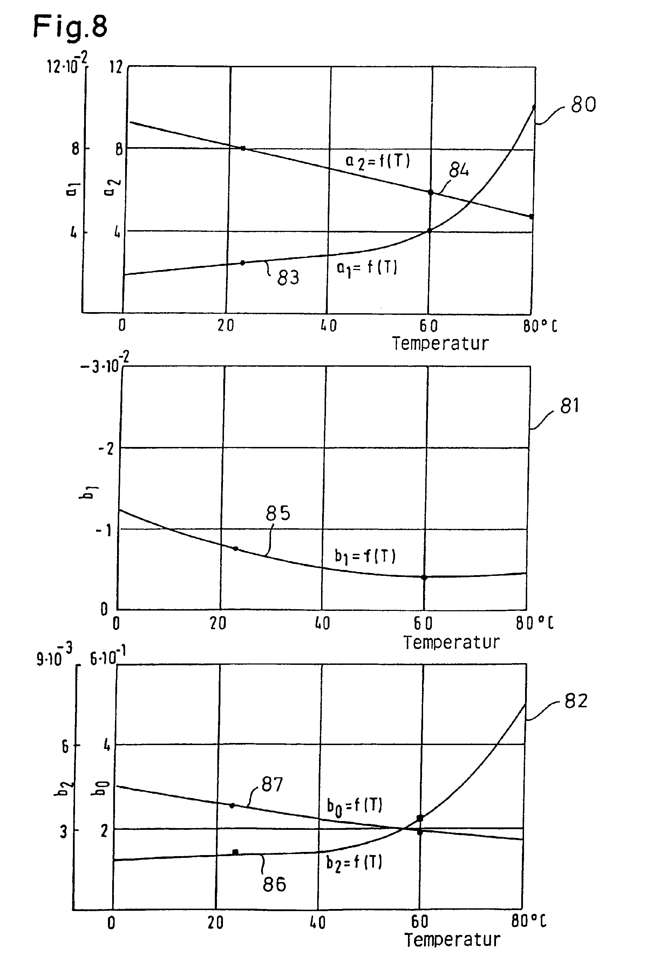

Die Fig. 8 zeigt die Diagramme 80, 81 und 82. Das Diagramm 80 veranschaulicht den Verlauf der Parameter $a_1$ und $a_2$ in Abhängigkeit von der Temperatur. Die entsprechenden Kurven 83 und 84 werden aufgrund der für die Temperaturen $T_1$, $T_2$ und $T_3$ die ermittelten Werte für $a_1$ und $a_2$ ermittelt, indem beispielsweise durch die ermittelten Punkte ein Polynom gelegt wird, beispielsweise ein Spline-Polynom.

Entsprechend zeigt das Diagramm 81 den Kurvenverlauf 85 für den Parameter $b_1$ in Abhängigkeit von der Temperaturen, wobei die Kurve 85 wiederum aufgrund der ermittelten Parameterwerte bei den Temperaturen $T_1$, $T_2$ und $T_3$ ermittelt wurde. Auch hier kann wiederum ein Polynom beispielsweise ein Spline-Polynom zur Beschreibung der Kurve 85 verwendet werden.

Das Diagramm 82 zeigt die entsprechenden Kurven 86 und 87 für die entsprechenden Verläufe der Koeffizienten $b_0$ und $b_2$.

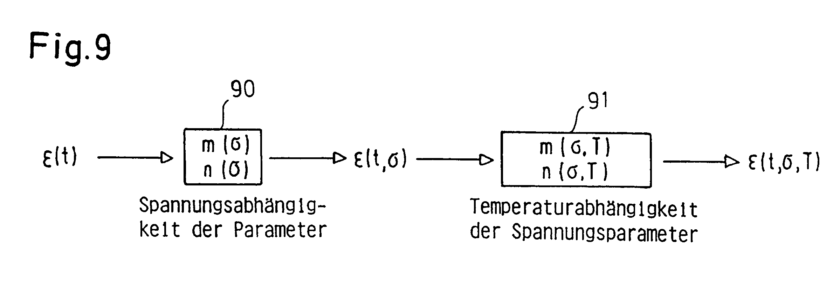

Die Fig. 9 veranschaulicht die schrittweise Erweiterung des nur zeitabhängigen Findley-Ansatzes nach Formel (6) auf einen von der Zeit t, der Spannung $\sigma$ und der Temperatur T abhängigen Zusammenhang.

Dazu werden in dem Schritt 90 zunächst die Kriechparameter m und n jeweils in Abhängigkeit von der Spannung $\sigma$ ausgedrückt, so dass man die Gleichung (7) erhält. Im nächsten Schritt 91 werden dann die Kriechparameter m und n zusätzlich in Abhängigkeit von der Temperatur T durch Einführung der temperaturabhängigen Parameter $a_1$, $a_2$ bzw. $b_0$, $b_1$ und $b_2$ gemäß Formeln (8) und (9) ausgedrückt. Daraus ergibt sich dann schließlich der folgende Zusammenhang.

$$\varepsilon(t, \sigma, T) = \frac{\sigma}{E(T)} + m(\sigma, T) \left( \frac{t}{t_0} \right)^{n(\sigma, T)} \quad (10)$$

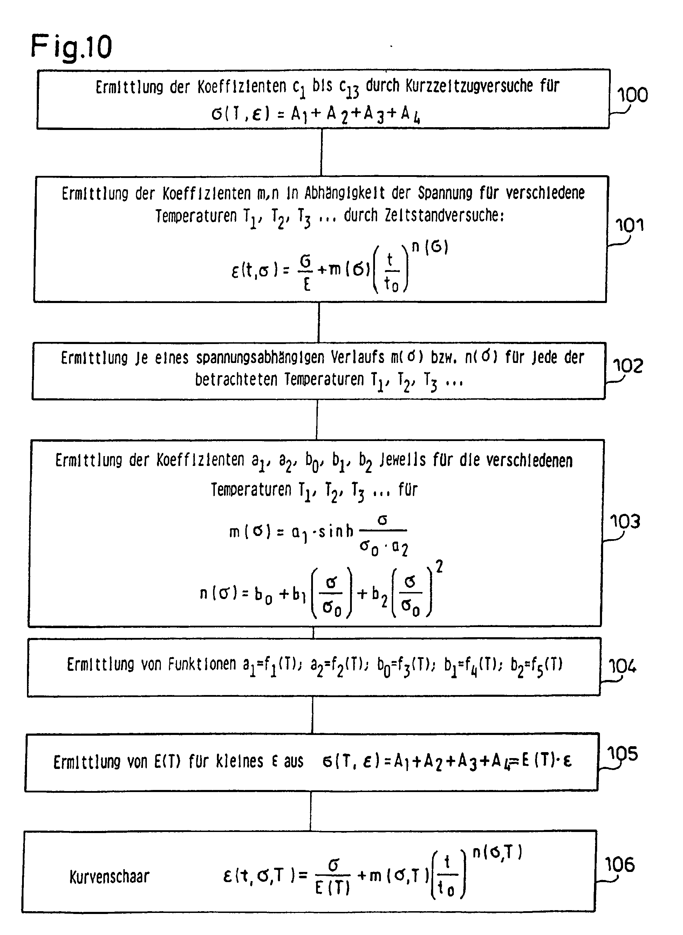

Die Fig. 10 zeigt ein Flussdiagramm eines erfindungsgemäßen Verfahrens zur Ermittlung eines Zusammenhangs zwischen der Dehnung $\varepsilon$ und der Spannung $\sigma$ in Abhängigkeit von der Zeit t und der Temperatur T. In Schritt 100 wird zunächst der Fall der Kurzzeitbelastung zum Beispiel mittels Kurzzeit-Zugversuchen untersucht. Dadurch werden die Koeffizienten $c_1$ bis $c_{13}$ des Ansatzes (1) ermittelt. Die resultierende Funktion beschreibt dann also den Zusammenhang zwischen der Spannung $\sigma$ und der Dehnung $\varepsilon$ in Abhängigkeit von der Temperatur T bei einer Kurzzeit-Belastung.

Im Schritt 101 wird sodann das Verhalten des zu untersuchenden Materials für den Fall der Langzeitbelastung untersucht. Dazu werden jeweils für bestimmte Temperaturen $T_1$, $T_2$ und $T_3$ mit jeweils unterschiedlichen konstanten Spannungen $\sigma$ Zeitstandversuche durchgeführt und aus den ermittelten Spannungs-Dehnungs-Kurven jeweils ein Wertepaar für die Kriechparameter n und m ermittelt.

Daraus ergibt sich in dem Schritt 102 jeweils ein spannungsabhängiger Verlauf der Kriechparameter m und n in Abhängigkeit von der Spannung $\sigma$ für jede der betrachteten Temperaturen, wie auch in den Figuren 6 und 7 anhand eines Beispiels dargestellt.

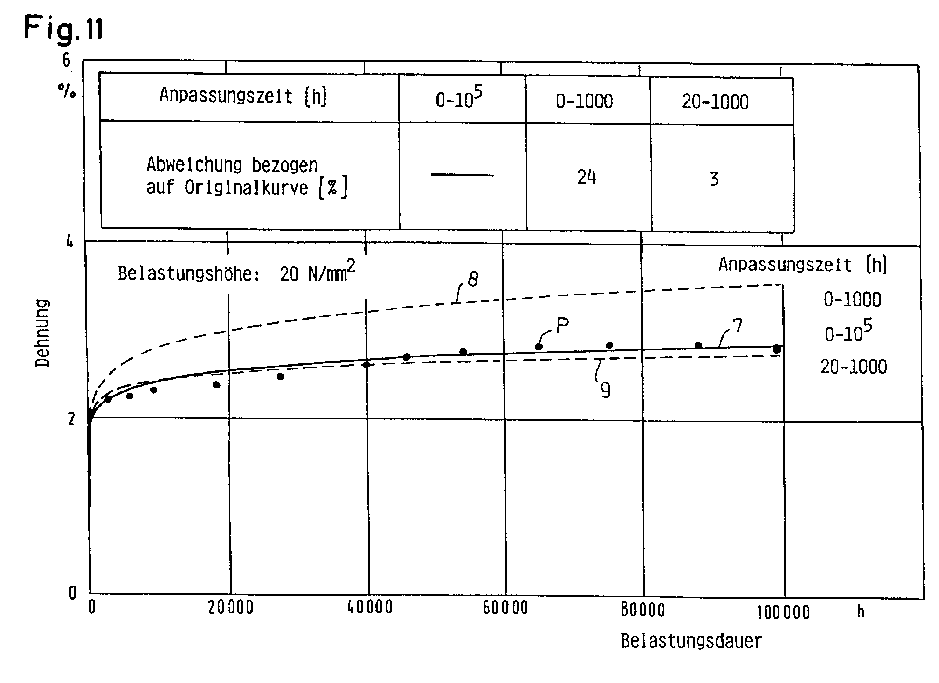

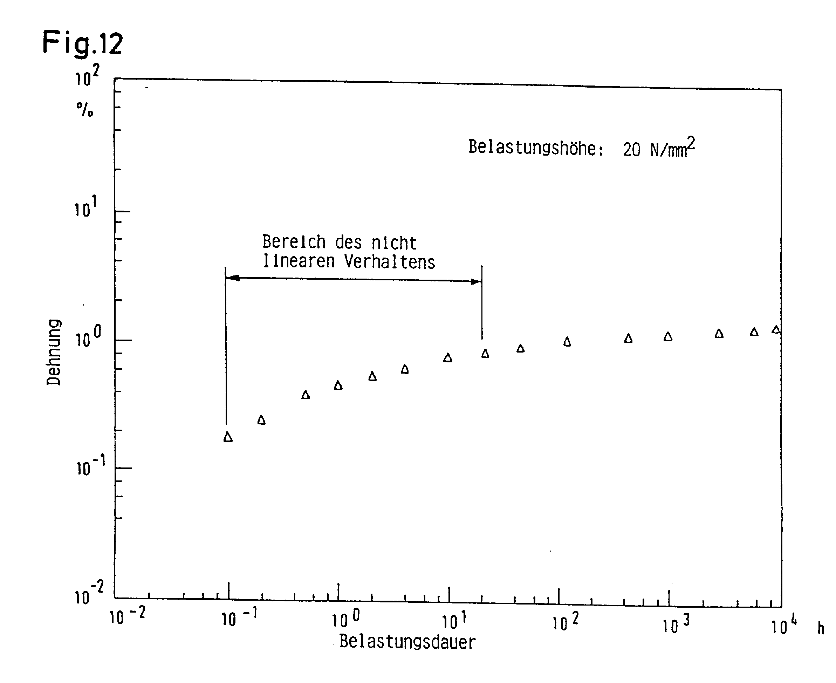

Für die Ermittlung der Kriechparameter hat sich herausgestellt, das die Erfindung beispielsweise bei einer Versuchsdauer von ca. sieben Wochen (ca. 1000 h) eine hinreichend genaue Approximierung erlaubt, die die Dehnung auch für Belastungsdauern von über einem Jahr und länger beschreibt. Dies wird mit Bezug auf die Fig. 11 und 12 noch näher erläutert.

In dem Schritt 103 werden die Parameter $a_1$, $a_2$ bzw. $b_0$, $b_1$ und $b_2$ der Ansätze (8) und (9) aus den experimentell ermittelten Wertepunkte der spannungsabhängigen Verläufe von m bzw. n ermittelt. Daraus ergeben sich für jede der betrachteten Temperaturen entsprechende Werte für die Koeffizienten der Ansätze (8) und (9).

Die Werte dieser Koeffizienten sind jeweils temperaturabhängig. Zur Beschreibung des jeweiligen Temperaturzusammenhangs wird durch die jeweils ermittelten Wertepunkte eine Funktion f(T) beispielsweise mittels eines Polynom- oder Spline-Polynom-Ansatzes gelegt. Die entsprechenden Polynome $f_1$ bis $f_5$ werden in Schritt 104 ermittelt, entsprechend den Kurven 83 bis 86 der Fig. 8.

In Schritt 105 wird das Elastizitätsmodul E(T) aus der Formel (1) ermittelt, indem beispielsweise ein relativ kleiner Werte zwischen 0,05% und 0,25 % für die Dehnung $\varepsilon$ angenommen wird, d.h. einer Dehnung im linearen hookschen Bereich.

In dem Schritt 106 werden dann die ermittelten Zusammenhänge in die Formel (10) eingesetzt, d.h. der im Schritt 105 ermittelte Zusammenhang E(T) sowie die Zusammenhänge für die Kriechparameter m und n, die sich aus den Ansätzen (8) und (9) und die ermittelten durch die Funktionen $f_1$ bis $f_2$ beschriebenen von der Temperatur T abhängigen Verläufe der entsprechenden Koeffizientenwerte ergeben.

Die so ausgedrückte Formel (10) gibt also unmittelbar einen Zusammenhang zwischen der Dehnung $\varepsilon$ und der Spannung $\sigma$ für beliebige Zeiten t und beliebige Temperaturen T an.

Die Formel (10) kann mittels eines Computerprogramms in einem Datenverarbeitungssystem, beispielsweise einem Personal Computer, implementiert werden, so dass sich durch Eingabe beispielsweise einer interessierenden Zeit t und einer bestimmten Temperatur T sich unmittelbar eine Spannungs-Dehnungs-Kurve errechnen und anzeigen lässt. Durch Variation der Temperatur T erhält man dann beispielsweise rein rechnerisch die Darstellung der Fig. 1.

Die Fig. 11 zeigt die Dehnung über der Belastungsdauer. Die Kurve 7 wurde in einem Zeitstandversuch einer Belastungsdauer von insgesamt 100 000 Stunden (ca. 10 Jahre) ermittelt. Ferner zeigt die Fig. 11 die Messpunkte P die der Kurve 7 zugrunde liegen.

Die gestrichelte Kurve 8 der Fig. 11 ist ein aus der Formel (6) berechneter Kurvenverlauf, wobei zur Ermittlung der Kriechparameter m und n Messpunkte P für Belastungsdauern zwischen t=0 und t= 1000 Stunden berücksichtigt wurden. Die gestrichelte Kurve 9 entspricht der Kurve 8, jedoch wurden nur Messpunkte zwischen t = 20 Stunden und t = 1000 Stunden bei der Approximationsberechnung berücksichtigt. Durch die nicht Berücksichtigung der Messpunkte im Anfangsbereich zwischen t = 0 und t = 20 Stunden ist eine deutlich verbesserte Approximation der Kurve 9 an die tatsächlich gemessene Kurze 7 im Vergleich zu der Kurve 8 gegeben.

Generell ist eine genauere Extrapolation erreichbar, wenn die Messwerte in einem Anfangsbereich bis etwa t = 20 bis 100 Stunden nicht für die Bestimmung der Kriechparameter m und n berücksichtigt werden. Das liegt daran, dass in dem Anfangsbereich das Material ein nicht-lineares Verhalten zeigt. Dies verdeutlicht auch die Fig. 12:

Die Fig. 12 zeigt die Dehnung in % in Abhängigkeit von der Belastungsdauer für eine Belastung von 20N/mm$^2$. Aus dem Verlauf der Messwerte der Fig. 12 ergibt sich, dass das Materialverhalten in dem Anfangsbereich bis ca. 20 Stunden nichtlinear ist und danach in einen linearen Verlauf übergeht. Für die genaue Ermittlung des Anfangsbereichs ist also der Übergang zwischen nicht-linearen und linearen Verhalten zu ermitteln.

Das erfindungsgemäße Verfahren zur Bestimmung des Zusammenhangs zwischen der Spannung $\sigma$ und der Dehnung $\varepsilon$ erlaubt es die Kosten und die erforderliche Zeit zur Ermittlung der Materialeigenschaften von Kunststoffen drastisch zu reduzieren. Ferner erlaubt dieses Verfahren aufgrund der gewonnenen und durch die Formel (10) ausgedrückten Ergebnisse die Konstruktion von Kunststoff-Teilen mit größerer Genauigkeit durchzuführen, gerade auch was das Langzeitverhalten des Werkstoffs betrifft.

Ebenfalls erlaubt es das erfindungsgemäße Verfahren eine Aussage über die Belastungsgrenze des Materials zu treffen. Die Erfahrungen aus dem Langzeitverhalten und Beobachtungen von zahlreichen experimentellen Ergebnissen aus Zugkriechversuchen bei Raum- sowie bei höheren Temperaturen zeigen, dass sich die unverstärkten Thermoplaste an ihrer Bemessungsgrenze befinden, wenn zusätzlich zu der elastischen Dehnung 0,5 % nicht-elastische Dehnung hinzukommt. Die Line von 0,5 % nicht-elastische Dehnung entspricht derjenigen Last, bei der eine überproportionale Dehnung innerhalb der Belastungsdauer zu verzeichnen ist.

**Patentansprüche**

1. Verfahren zur Ermittlung eines Zusammenhangs zwischen einer Dehnung $\varepsilon$ und einer Spannung $\sigma$ in Abhängigkeit von einer Belastungsdauer t der Spannung $\sigma$ und einer Temperatur T, mit folgenden Schritten:

- Bestimmung einer ersten Funktion zur Beschreibung eines Zusammenhangs zwischen der Spannung $\sigma$ und der Dehnung $\varepsilon$ in Abhängigkeit von der Temperatur T bei einer Kurzzeitzugbelastung, wobei die erste Funktion die folgende Form hat:

$$\sigma(T,\varepsilon) = A_1 + A_2 + A_3 + A_4$$

wobei

$$A_1 = c_1\varepsilon + c_2\varepsilon^3 + c_3\varepsilon^5 + c_4 \ln\left(\varepsilon + \sqrt{\varepsilon^2 + 1}\right)$$

$$A_2 = c_5\varepsilon T + c_6\varepsilon T^3 + c_7\varepsilon T^5$$

$$A_3 = c_8\varepsilon^3 T + c_9\varepsilon^3 T^3 + c_{10}\varepsilon^3 T^5$$

$$A_4 = c_{11}\varepsilon^5 T + c_{12}\varepsilon^5 T^3 + c_{13}\varepsilon^5 T^5$$

wobei die Koeffizienten $c_1$ bis $c_{13}$ durch Kurzzeitzugversuche ermittelt werden,
- Ermittlung des Elastizitätsmoduls E(T) in Abhängigkeit von der Temperatur T aus der ersten Funktion,
- Bestimmung einer zweiten Funktion zur Beschreibung eines Zusammenhangs zwischen der Dehnung $\varepsilon$ und der Spannung $\sigma$ in Abhängigkeit von der Belastungsdauer t, der Temperatur T und eines von der Temperatur T abhängigen Elastizitätsmoduls E(T) bei einer Langzeitzugbelastung, wobei die zweite Funktion die folgende Form hat:

$$\varepsilon(t,\sigma) = \frac{\sigma}{E} + m(\sigma)\left(\frac{t}{t_0}\right)^{n(\sigma)}$$

wobei es sich bei $m(\sigma)$ um einen ersten spannungsabhängigen Koeffizienten und bei $n(\sigma)$ um einen zweiten spannungsabhängigen Koeffizienten handelt, wobei die Koeffizienten $m(\sigma)$ und $n(\sigma)$ für verschiedene Temperaturen durch Zeitstandversuche ermittelt werden,
wobei zur Ermittlung des von der Temperatur T abhängigen Elastizitätsmoduls E(T) die erste Funktion verwendet wird.

2. Verfahren nach Anspruch 1 bei dem der spannungsabhängige Verlauf des ersten Koeffizienten durch folgende Funktion beschrieben wird.

$$m(\sigma) = a_1 \cdot \sinh\frac{\sigma}{\sigma_0 \cdot a_2}$$

3. Verfahren nach Anspruch 1 oder 2 bei dem der spannungsabhängige Verlauf des zweiten Koeffizienten durch die folgende Funktion beschrieben wird:

$$n(\sigma) = b_0 + b_1\left(\frac{\sigma}{\sigma_0}\right) + b_2\left(\frac{\sigma}{\sigma_0}\right)^2$$

4. Verfahren nach Anspruch 2 oder 3, bei dem je ein spannungsabhängiger Verlauf des ersten und des zweiten Koeffizienten für verschiedene Temperaturen ermittelt wird.

5. Verfahren nach Anspruch 2, 3 oder 4, bei dem die Koeffizienten der die Verläufe der spannungsabhängigen ersten und zweiten Koeffizienten beschreibenden Funktionen aus den für verschiedene Temperaturen ermittelten spannungsabhängigen Verläufen ermittelt werden.

6. Verfahren nach einem der Ansprüche 2 bis 5, bei dem aus den jeweils für eine bestimmte Temperatur ermittelten Koeffizienten der die spannungsabhängigen Koeffizienten beschreibenden Funktionen jeweils eine weitere Funktion zur Beschreibung der Temperaturabhängigkeit des jeweiligen Koeffizienten ermittelt wird.

7. Verfahren nach einem der vorhergehenden Ansprüche, bei dem die ermittelte Kurvenschar durch die folgende Funktion beschrieben wird:

$$\varepsilon(t,\sigma,T) = \frac{\sigma}{E(T)} + m(\sigma,T)\left(\frac{t}{t_0}\right)^{n(\sigma,T)}$$

8. Computerprogrammprodukt auf einem computerlesbaren Medium zur Bewirkung der Ausführung eines Verfahrens nach einem der vorhergehenden Ansprüche, wenn das Programm auf dem Computer ausgeführt wird.

9. Datenverarbeitungsprogramm zur Ausführung in einem Datenverarbeitungssystem mit Softwarekomponenten zur Durchführung eines Verfahrens nach einem der vorhergehenden Ansprüche 1 bis 7, wenn das Programm in der Datenverarbeitungsanlage ausgeführt wird.

**Claims**

1. A method of determining a relationship between a strain $\varepsilon$ and a stress $\sigma$ in dependence on a load duration t of the stress $\sigma$ and a temperature T, with the following steps:

   - determining a first function to describe a relationship between the stress $\sigma$ and the strain $\varepsilon$ in dependence on the temperature T under a short term loading, wherein the first function has the following form:

$$\sigma(T,\varepsilon) = A_1 + A_2 + A_3 + A_4$$

   wherein

$$A_1 = c_1\varepsilon + c_2\varepsilon^3 + c_3\varepsilon^5 + c_4 \ln\left(\varepsilon + \sqrt{\varepsilon^2 + 1}\right)$$

$$A_2 = c_5\varepsilon T + c_6\varepsilon T^3 + c_7\varepsilon T^5$$

$$A_3 = c_8 \varepsilon^3 T + c_9 \varepsilon^3 T^3 + c_{10} \varepsilon^3 T^5$$

$$A_4 = c_{11} \varepsilon^5 T + c_{12} \varepsilon^5 T^3 + c_{13} \varepsilon^5 T^5$$

wherein the coefficients $c_1$ to $c_{13}$ are determined by a short term tensional tests,
- determining the modulus of elasticity E(T) in dependence on the temperature T from the first function,
- determining a second function to describe a relationship between the strain $\varepsilon$ and the stress $\sigma$ in dependence on the loading duration t, the temperature T and a modulus of elasticity E(T) dependent on the temperature T under a long term loading, wherein the second function has a following form:

$$\varepsilon(t,\sigma) = \frac{\sigma}{E} + m(\sigma)\left(\frac{t}{t_0}\right)^{n(\sigma)}$$

wherein $m(\sigma)$ is a first stress-dependent coefficient $n(\sigma)$ is a second stress-dependent coefficient, wherein the coefficients $m(\sigma)$ and $n(\sigma)$ are determined for different temperatures by stress-rupture tests, wherein the first function is used to determine the modulus of elasticity E(T) dependent on the temperature T.

2. A method as claimed in claim 1, in which the stress-dependent variation of the first coefficient is described by the following function:

$$m(\sigma) = a_1 \cdot \sinh \frac{\sigma}{\sigma_0 \cdot a_2}$$

3. A method as claimed in claim 1 or 2, in which the stress-dependent variation of the second coefficient is described by the following function:

$$n(\sigma) = b_0 + b_1\left(\frac{\sigma}{\sigma_0}\right) + b_2\left(\frac{\sigma}{\sigma_0}\right)^2$$

4. A method as claimed in claim 2 or 3, in which a stress-dependent variation of each of the first and second coefficients is determined for different temperatures.

5. A method as claimed in claim 2, 3 or 4, in which the coefficients of the functions describing the variations of the stress-dependent first and second coefficients are determined from the stress-dependent variations determined for different temperatures.

6. A method as claimed in one of claims 2 to 5, in which a respective further function for describing the temperature dependence of each coefficient is determined from the coefficients determined for a predetermined temperature of the functions describing the stress-dependent coefficients.

7. A method as claimed in one of the preceding claims, in which the family of curves which are determined is described by the following function:

$$\varepsilon(t,\sigma,T) = \frac{\sigma}{E(T)} + m(\sigma,T)\left(\frac{t}{t_0}\right)^{n(\sigma,T)}$$

**8.** A computer program product on a computer-readable medium for effecting the performance of a method as claimed in one of the preceding claims when the programme is executed on the computer.

**9.** A data processing programme for execution in a data processing system with software components for performing a method as claimed in one of the preceding claims 1 to 7, when the programme is executed in the data processing facility.

**Revendications**

**1.** Procédé destiné à déterminer une relation entre une extension $\varepsilon$ et une contrainte $\sigma$ d'après une durée de charge t de la contrainte $\sigma$ et une température T, **caractérisé en ce qu'**il comprend les étapes suivantes :

- détermination d'une première fonction destinée à décrire une relation entre la contrainte $\sigma$ et l'extension $\varepsilon$ d'après une température T lors d'une charge de traction de courte durée, la première fonction ayant la forme suivante :

$$\sigma(T,\varepsilon) = A_1 + A_2 + A_3 + A_4$$

dans laquelle

$$A_1 = c_1\varepsilon + c_2\varepsilon^3 + c_3\varepsilon^5 + c_4 \ln\left(\varepsilon + \sqrt{\varepsilon^2 + 1}\right)$$

$$A_2 = c_5\varepsilon T + c_6\varepsilon T^3 + c_7\varepsilon T^5$$

$$A_3 = c_8\varepsilon^3 T + c_9\varepsilon^3 T^3 + c_{10}\varepsilon^3 T^5$$

$$A_4 = c_{11}\varepsilon^5 T + c_{12}\varepsilon^5 T^3 + c_{13}\varepsilon^5 T^5$$

les coefficients $c_1$ à $c_{13}$ sont calculés par le biais d'essais de traction de courte durée,
- calcul du module d'élasticité E(T) d'après la température T à partir de la première fonction,
- détermination d'une deuxième fonction destinée à décrire une relation entre l'extension $\varepsilon$ et la contrainte $\sigma$ d'après la durée de charge t, de la température T et un module d'élasticité E(T) dépendant de la température T lors d'une charge de traction de longue durée, la deuxième fonction ayant la forme suivante :

$$\varepsilon(t, \sigma) = \frac{\sigma}{E} + m(\sigma)\left(\frac{t}{t_0}\right)^{n(\sigma)}$$

dans laquelle m($\sigma$) est un premier coefficient dépendant de la contrainte et n($\sigma$) un deuxième coefficient dépendant de la contrainte, les coefficients m($\sigma$) et n($\sigma$) étant calculés pour différentes températures par le biais d'essais de fluage, la première fonction est utilisée pour calculer le module d'élasticité E(T) dépendant de la température T.

2. Procédé selon la revendication 1, **caractérisé en ce que** l'évolution du premier coefficient dépendant de la contrainte est décrite par la fonction suivante :

$$m(\sigma) = a_1 \cdot \sinh\frac{\sigma}{\sigma_0 \cdot a_2}$$

3. Procédé selon la revendication 1 ou la revendication 2, **caractérisé en ce que** l'évolution du deuxième coefficient dépendant de la contrainte est décrite par la fonction suivante :

$$n(\sigma) = b_0 + b_1\left(\frac{\sigma}{\sigma_0}\right) + b_2\left(\frac{\sigma}{\sigma_0}\right)^2$$

4. Procédé selon la revendication 2 ou la revendication 3, **caractérisé en ce qu'**une évolution respective du premier et du deuxième coefficient dépendant de la contrainte est calculée pour différentes températures.

5. Procédé selon l'une des quelconques revendications 2, 3 ou 4, **caractérisé en ce que** les coefficients des fonctions décrivant les évolutions du premier et du deuxième coefficient dépendant de la contrainte, sont calculés à partir des évolutions dépendant de la contrainte pour différentes températures.

6. Procédé selon l'une des revendications 2 à 5, **caractérisé en ce que**, à partir des coefficients calculés respectivement pour une température déterminée des fonctions décrivant les coefficients dépendant de la contrainte, une fonction supplémentaire est à chaque fois calculée afin de décrire la dépendance du coefficient respectif par rapport à la température.

7. Procédé selon l'une des revendications précédentes 6, **caractérisé en ce que** la famille des courbes calculée est décrite par la fonction suivante :

$$\varepsilon(t, \sigma, T) = \frac{\sigma}{E(T)} + m(\sigma, T)\left(\frac{t}{t_0}\right)^{n(\sigma, T)}$$

8. Produit de programme informatique sur un support lisible par un ordinateur **caractérisé en ce qu'**il est destiné à provoquer l'exécution d'un procédé selon l'une des revendications précédentes lorsque le programme est exécuté sur l'ordinateur.

9. Programme de traitement de données **caractérisé en ce qu'**il est destiné à l'exécution dans un système de traitement de données comprenant des composants logiciels en vue de l'exécution d'un procédé selon l'une des revendications 1 à 7 précédentes lorsque le programme est exécuté dans l'installation de traitement de données.

# Fig.1

# Fig.2

$\sigma = const$

$\varepsilon$ (Dehnung)

20, 20, 20, 20, 20, 20, 20, 20

$m t^n$

$\varepsilon_0$

Zeit    $t$

$$\varepsilon_0 = \frac{\sigma}{E}$$

# Fig.3

$\varepsilon$

Ausgleichkurve: $\varepsilon_{app}(t)$

$\delta_3$

$\delta_k$

20

$\delta_1$

$\delta_2$

20

$$\sum_{i=1}^{k} \delta_i^2 = Min$$

$t$

$$\varepsilon_{app}(t) = \varepsilon_0 + m(t/t_0)^n$$

# Fig.4

$$\varepsilon(t) = \frac{\sigma}{E} + m\left(\frac{t}{t_0}\right)^n$$

$$\varepsilon(t,\sigma) = \frac{\sigma}{E} + m(\sigma)\left(\frac{t}{t_0}\right)^{n(\sigma)}$$

Spannung    $N/mm^2$

# Fig.5

$$T_1 < T_2 < T_3$$

$$m(\sigma) = a_1 \cdot \sinh\frac{\sigma}{\sigma_0}a_2$$

$$n(\sigma) = b_0 + b_1\left(\frac{\sigma}{\sigma_0}\right) + b_2\left(\frac{\sigma}{\sigma_0}\right)^2$$

## Fig.6

$$m(\sigma) = a_1 \cdot \sinh \frac{\sigma}{\sigma_0 a_2}$$

## Fig.7

$$n(\sigma) = b_0 + b_1\left(\frac{\sigma}{\sigma_0}\right) + b_2\left(\frac{\sigma}{\sigma_0}\right)^2$$

# Fig.8

# Fig.9

ε(t) ⟶ [ m (σ) / n (σ) ] 90 ⟶ ε(t,σ) ⟶ [ m (σ,T) / n (σ,T) ] 91 ⟶ ε(t,σ,T)

Spannungsabhängigkeit der Parameter

Temperaturabhängigkeit
der Spannungsparameter

# Fig.10

Ermittlung der Koeffizienten $c_1$ bis $c_{13}$ durch Kurzzeitzugversuche für

$$\sigma(T,\varepsilon) = A_1 + A_2 + A_3 + A_4$$

— 100

Ermittlung der Koeffizienten m,n in Abhängigkeit der Spannung für verschiedene Temperaturen $T_1$, $T_2$, $T_3$ ... durch Zeitstandversuche:

$$\varepsilon(t,\sigma) = \frac{\sigma}{E} + m(\sigma)\left(\frac{t}{t_0}\right)^{n(\sigma)}$$

— 101

Ermittlung je eines spannungsabhängigen Verlaufs $m(\sigma)$ bzw. $n(\sigma)$ für jede der betrachteten Temperaturen $T_1$, $T_2$, $T_3$ ...

— 102

Ermittlung der Koeffizienten $a_1$, $a_2$, $b_0$, $b_1$, $b_2$ jeweils für die verschiedenen Temperaturen $T_1$, $T_2$, $T_3$ ... für

$$m(\sigma) = a_1 \cdot \sinh\frac{\sigma}{\sigma_0 \cdot a_2}$$

$$n(\sigma) = b_0 + b_1\left(\frac{\sigma}{\sigma_0}\right) + b_2\left(\frac{\sigma}{\sigma_0}\right)^2$$

— 103

Ermittlung von Funktionen $a_1 = f_1(T)$; $a_2 = f_2(T)$; $b_0 = f_3(T)$; $b_1 = f_4(T)$; $b_2 = f_5(T)$

— 104

Ermittlung von $E(T)$ für kleines $\varepsilon$ aus $\sigma(T,\varepsilon) = A_1 + A_2 + A_3 + A_4 = E(T)\cdot\varepsilon$

— 105

Kurvenschaar $\qquad \varepsilon(t,\sigma,T) = \frac{\sigma}{E(T)} + m(\sigma,T)\left(\frac{t}{t_0}\right)^{n(\sigma,T)}$

— 106

# Fig. 11

| Anpassungszeit [h] | $0-10^5$ | 0-1000 | 20-1000 |
|---|---|---|---|
| Abweichung bezogen auf Originalkurve [%] | — | 24 | 3 |

Belastungshöhe: 20 N/mm²

Dehnung

Belastungsdauer

Anpassungszeit [h]

0-1000

$0-10^5$

20-1000

EP 1 248 204 B1

Fig.12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Creep behavior of carbonfiber-reinforced polyetheretherketone (PEEK) [±45]4S laminated composites (I. **C.C.M. MA et al.** Composites Part B (Engineering. Elsevier UK, 1997, vol. 28B, 407-417

- **SHING-CHUNG YEN et al.** Accelerated Characterization of Creep Response of an Off-Axis Composite Material. *Composites Science and Technology UK,* 1990, vol. 38 (2), ISSN 0266-3538, 103-118